# EUROPEAN PATENT SPECIFICATION

(11) **EP 2 726 898 B1**
(45) Date of publication and mention of the grant of the patent: **09.08.2017**
(21) Application number: 12740209.7
(22) Date of filing: 21.06.2012
(51) Int. Cl.: G01S 5/02, H04W 4/02, G01S 19/46, G01S 19/17

(54) **LOCATION ESTIMATION FOR A MOBILE DEVICE**
POSITIONSBESTIMMUNG FÜR EINE MOBILE VORRICHTUNG
ESTIMATION D'EMPLACEMENT DE DISPOSITIF MOBILE

(30) Priority: 29.06.2011 EP 11171854
(43) Date of publication of application: 07.05.2014
(73) Proprietor: Koninklijke Philips N.V., 5656 AE Eindhoven (NL)
(72) Inventor: FULTON, Paul, Michael, 5656 AE Eindhoven (NL); EDWARDS, Martin, John, 5656 AE Eindhoven (NL); REYMANN, Steffen, 5656 AE Eindhoven (NL); POLLING, Dennis, 5656 AE Eindhoven (NL); SIMONS, Paul, Richard, 5656 AE Eindhoven (NL)
(74) Representative: Steffen, Thomas
(86) International application number: PCT/IB2012/053129
(87) International publication number: WO 2013/001421

(56) References cited:
- WO-A1-2010/003898
- WO-A1-2010/015854
- FR-A1- 2 896 655
- GB-A- 2 469 523
- US-A1- 2002 080 063
- US-A1- 2004 104 841
- US-A1- 2006 170 591

## Description

### TECHNICAL FIELD OF THE INVENTION

The invention relates to a method for estimating the location of a mobile device and a mobile device implementing the same, particularly where an accurate position of the mobile device using a satellite-based positioning system is unavailable.

### BACKGROUND TO THE INVENTION

Falls are one of the greatest health risk factors for elderly people. About one third of older people above the age of 65 fall at least once a year.

Many elderly people now carry personal help buttons (PHBs) or personal emergency response systems (PERS) that they can activate if they need urgent assistance, such as when they fall. Automated fall detectors are also available that monitor the movements of the user and automatically trigger an alarm if a fall is detected.

These devices (i.e. PHBs, PERS and fall detectors) can initiate a landline call via a base unit located nearby to the user (i.e. typically in the user's home) to a call centre when they are activated, and the personnel in the call centre can talk to the user and arrange for assistance to be sent to the user in an emergency. As the user is a registered subscriber to the PHB/PERS service, their home location (or other location where the base station is found) will be known, and the emergency assistance can be directed to that location by the call centre personnel.

However, systems are now available that make use of a mobile telephone or other mobile telecommunications-enabled device carried by the user to allow the PHB, PERS or fall detector device to initiate a mobile call to the call centre. As these devices can be used anywhere where there is cellular network coverage, it is necessary for information on the location of the user to be provided to the call centre when an alarm is triggered. This information should be provided automatically, since the user may be unresponsive (i.e. they may have fallen and are unconscious). Typically, this location information is derived using a Global Positioning System (GPS) receiver in the mobile device.

However, when the user is indoors or otherwise out of sight of the required satellites, reliable position information is not available to the call centre.

US 2010/0194631 describes a method of determining the location of a portable device that uses GPS when it is available, and triangulation using information on cell towers when GPS is not available. This technique allows the location of a portable device to be estimated whenever a user has network coverage. At best, cell tower triangulation (or similar techniques such as cell tower fingerprinting) can provide a location for the user to an accuracy of around 50 meters, although this depends on favorable network topology and having multiple cell towers in range of the user. A typical figure is much higher, e.g. 200 meters. This accuracy may not be sufficient to locate the user to the correct location or building in an emergency situation. WO 201/015854 A1 discloses determining the position of a mobile device by GPS at "important" locations, and obtaining and storing the cell IDs and the signal strength of the surrounding base stations in a database. When GPS positioning is not possible, a location corresponding to the currently visible base stations is selected from the database and used as location estimate for the mobile phone. Important locations are for example start and end point of a journey, and positions at which GPS reception is difficult.

WO 2010/003898 A1 discloses periodically measuring the position of a mobile device by GPS. Geographical areas such as cells of a communciation network in which the user spends a significant amount of time are identified and their cell IDs are stored. The system also stores in a memory, for each geographical area, the average GPS location before the loss of the GPS signal. In a case of need, this estimated position can be used for locating the mobile apparatus.

Therefore, there is a need for an alternative technique for determining the location of the user when GPS or other satellite-based positioning systems are unavailable.

### SUMMARY OF THE INVENTION

According to a first aspect of the invention, there is provided a method according to claim 1. In one embodiment, the step of analyzing the measurements to identify landmarks comprises identifying clusters in the measurements of the position of the mobile device; and identifying each identified cluster as a landmark. In a further embodiment, the step of analyzing the measurements to identify landmarks comprises identifying a journey undertaken by the user from consecutive measurements of the position of the user; and identifying the end point of the journey as a landmark.

In one implementation, the end point of the journey corresponds to a point at which it becomes not possible to use the satellite-based positioning system to measure the position of the mobile device. In addition, or alternatively, the end point of the journey corresponds to a point at which a movement sensor in the mobile device indicates that the mobile device is no longer moving.

In a further embodiment, the step of analyzing the measurements to identify landmarks comprises identifying a location as corresponding to a first measurement of the position of the mobile device obtained after a period of time during which the mobile device is stationary.

In some embodiments, the method further comprises the step of noting the time at which each measurement of the position of the mobile device is obtained; wherein the step of analyzing the measurements to identify landmarks
further comprises identifying the times at which the mobile device is at each landmark; and wherein the step of estimating the location of the mobile device uses the current time and identity of the base station by which the mobile station is currently served. In this way, it is possible to determine which one of multiple locations within the coverage area of a particular base station the user is most likely to be found, based on the time of day that the user is normally found at that location.

In some embodiments, the method further comprises the step of obtaining measurements of the strength of signals received from the base station serving the mobile device at the time of each measurement of the position of the mobile device; wherein the step of analyzing the measurements to identify landmarks further comprises identifying the measured signal strength when the mobile device is at each landmark; and wherein the step of estimating the location of the mobile device uses the identity and current measured signal strength of the base station by which the mobile station is currently served. This embodiment provides another way to determine which one of multiple locations within the coverage area of a particular base station the user is most likely to be found.

The step of estimating the location of the mobile device can comprise estimating the location of the mobile device using a recent measurement of the position of the mobile device and the one or more identified landmarks that are associated with the base station by which the mobile device is currently served. This embodiment provides yet another way to determine which one of multiple locations within the coverage area of a particular base station the user is most likely to be found.

Preferably, the step of estimating the location of the mobile device is performed after a user of the mobile device triggers an alarm or an alarm is otherwise triggered by the mobile device. In this case, the method preferably further comprises sending information on the one or more identified landmarks that are associated with the base station by which the mobile device is currently served from the mobile device to a remote location.

According to a second aspect of the invention, there is provided an apparatus according to claim 12. Preferred implementations are defined by the dependent claims. According to a third aspect of the invention, there is provided a computer program product according to claim 15.

### BRIEF DESCRIPTION OF THE DRAWINGS

Embodiments of the invention will now be described, by way of example only, with reference to the following drawings, in which:
Fig. 1 is a block diagram of a mobile personal emergency response system (PERS) device in accordance with the invention;
Fig. 2 is a flow chart illustrating a method according to an embodiment of the invention;
Fig. 3 is a diagram illustrating GPS data collected by a mobile PERS device on a map;
Fig. 4 is a diagram illustrating the identification of landmarks in the GPS data shown in Fig. 3; and
Fig. 5 is a table illustrating the content of an exemplary geoprediction database according to the invention.

### DETAILED DESCRIPTION OF THE PREFERRED EMBODIMENTS

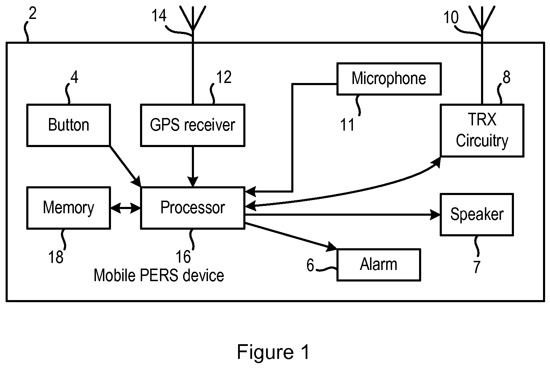

An exemplary mobile personal emergency response system (PERS) device 2 is shown in Figure 1. The device 2 comprises a button 4 that can be activated by the user when they require assistance, an audible alarm unit 6 that can be used to summon the assistance of someone in the vicinity of the user when the button 4 is activated, a loudspeaker 7, transceiver circuitry 8 and associated antenna 10 for initiating a call to a call centre over a cellular telecommunication network, a microphone 11 and a GPS receiver 12 and associated antenna 14 for determining the location of the mobile PERS device 2 from received GPS signals.

The mobile PERS device 2 also comprises a processor 16 that is connected to the button 4, alarm 6, loudspeaker 7, transceiver circuitry 8, microphone 11 and GPS receiver 12, and that controls the operation of the device 2. The mobile PERS device 2 also comprises a memory 18 that is connected to the processor 16, and that can store, for example, code to be executed by the processor 16 to control the operation of the device 2, location information provided by the GPS receiver 12 and other information collected in accordance with the invention, as described further below.

It will be appreciated that the mobile PERS device 2 shown in Figure 1 is merely exemplary, and may take alternative forms without affecting the operation of the invention. For example, the mobile PERS device 2 can comprise a conventional mobile telephone, a smartphone or other mobile telecommunications-enabled device (such as personal digital assistant (PDA), laptop or tablet computer, etc.) and a separate device (such as a PHB) having a button that can be activated by the user, with the devices being paired together in a wired or wireless manner (for example using WiFi or Bluetooth).

The mobile PERS device 2 may make use of a further or alternative satellite-based positioning system to GPS, as known to those skilled in the art.

The button 4 may advantageously be a physical button on the device 2, although it will be appreciated that it can be implemented as a function that can be selected through the use of a keyboard or touch screen user interface in the device 2.

It will also be appreciated that where the mobile PERS device 2 is used to monitor the movement of the user, for example to detect a fall, the device 2 can comprise one or more sensors, for example an accelerometer, an air pressure sensor, a magnetometer, and/or a gyroscope, and this information may also be used to generate a help call.

As known, in the event of an emergency, the user can press or otherwise activate the button 4, which will trigger a call to a call centre. In order for the call centre personnel to be able to direct the emergency assistance to the appropriate location, GPS position information is acquired using the GPS receiver 12 in the device 2 after the button 4 is activated, and this position information is provided to the call centre during the call.

However, when GPS signals are unavailable, for example when the user is indoors or otherwise does not have line-of-sight to a sufficient number of satellites, it is not possible to provide this position information to the call centre.

Therefore, in accordance with the invention, a mapping between the Cell_ID (the identity of a network cell that is serving the mobile device 2), which is always available when the device 2 is able to make a call, and GPS positions (which are currently the best type of location measurement) is created.

By analyzing the GPS positions of the user/mobile device 2 over a period of time (for example several days), it is possible to identify locations that have been recently or previously visited by the user, and/or are frequently visited by the user, and can therefore be considered to be important. Each important location (denoted a "landmark" herein) is stored in a database together with the Cell_ID of the cell tower serving the device 2 when the device 2 is at that location (i.e. the Cell_ID of the tower serving the device 2 when the GPS position measurements were taken).

Subsequently, when the user activates their button 4, call centre personnel will first attempt to verify the safety and location of the user by voice communication and GPS location measurements. If this approach fails (for example if GPS is unavailable), the database can be queried using the serving Cell_ID to determine if there are any landmarks associated with that cell. If one or more landmarks are identified, the GPS coordinates of those landmarks can then be sent to the call centre by the device 2.

As typical cells can vary in radius from 500m to 30km, an emergency responder can be directed to the one or more landmarks within that cell, and this can reduce the time taken to find the user.

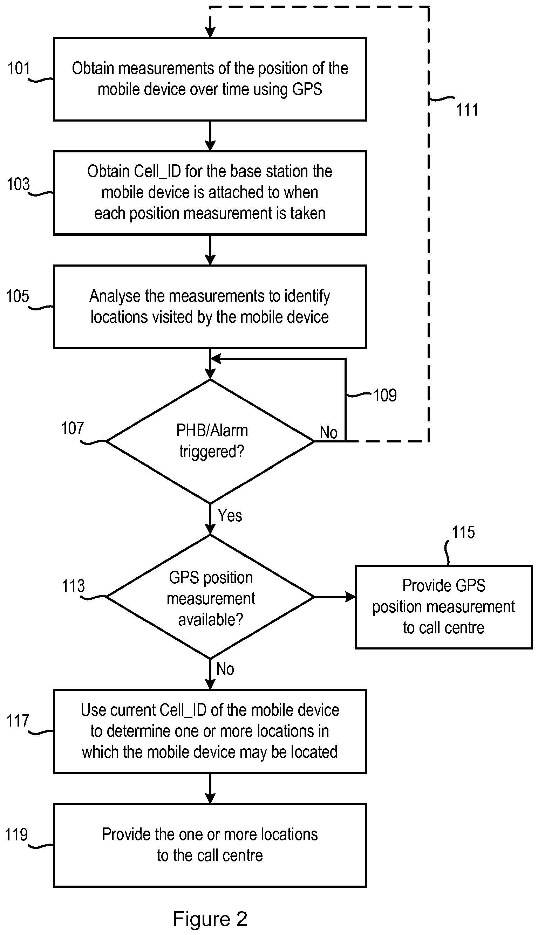

An exemplary method in accordance with the invention is shown in Figure 2. In step 101, measurements of the position of the device 2 are taken using the GPS receiver 12. In order to preserve the battery life of the device 2, measurements are not taken continuously, but instead they are taken at periodic intervals, for example every 10 seconds, every minute, or every few (e.g. 5) minutes. As discussed further below, the interval between measurements can be varied depending on the activity of the mobile device 2, as measured by a movement sensor, such as an accelerometer. For example, if the movement sensor indicates that the mobile device 2 is not moving, the interval between measurements can be relatively long, whereas the interval can be much shorter (e.g. every few seconds or minutes) when the movement sensor indicates that the mobile device 2 is moving.

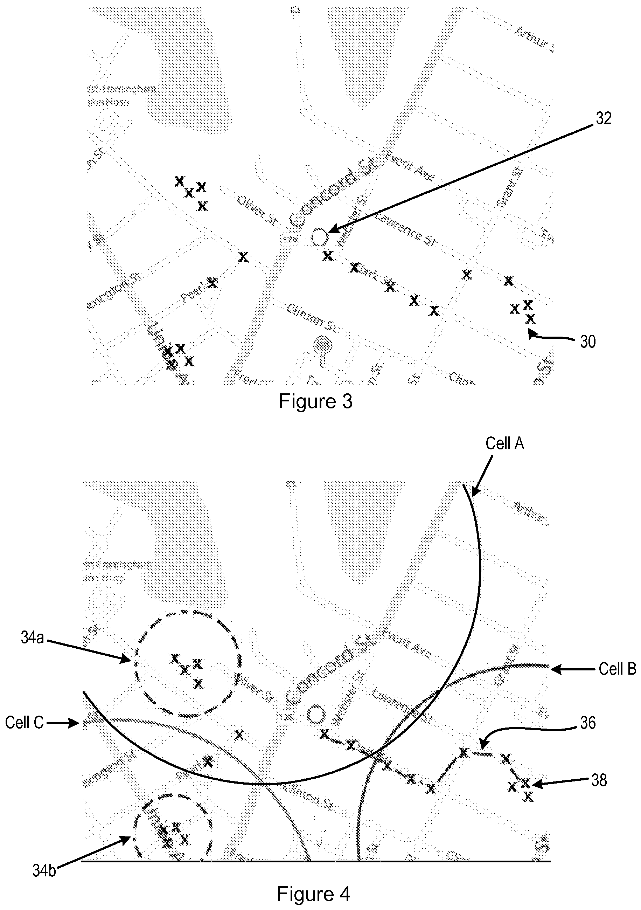

Figure 3 shows an exemplary set of GPS position measurements 30 plotted on a map. These measurements have been collected while the mobile device 2 is being used in an area that is local to the home of the user.

In step 103, the serving Cell_ID for the mobile device 2 is identified each time that a position measurement is taken. Mobile phone standards such as GSM, CDMA and UMTS require as a part of their specification that the transceiver in mobile devices can be interrogated directly to determine the base station identity, Cell_ID, and those skilled in the art will be aware of techniques for obtaining this information.

Each position measurement and associated Cell_ID are stored in the memory 18 of the device 2. The time at which the position measurement is taken can also be stored with the relevant position measurement and Cell_ID in the memory 18.

It will be appreciated that the location of the home of the user (perhaps in terms of a GPS position) will be known through the registration of the user with the PERS service. The home of the exemplary user in Figure 3 is labeled with reference numeral 32. As the mobile PERS device 2 may make use of a base unit when the user is at home (therefore negating the need for a position measurement to be taken by the mobile device 2 when an alarm is triggered), position measurements taken in step 101 that correspond to the home location of the user may be discarded (i.e. not stored in the memory 18) in order to reduce the size of the dataset to be stored and analyzed.

Once a number of position measurements and Cell_IDs have been collected, for example over a period of hours, days or weeks, or once a predetermined number of position measurements have been collected, the measurements can be analyzed to identify if there are any locations frequently or regularly visited by the mobile device 2 (step 105).

The objective of analysis step 105 is to identify particular locations that the user has visited from the stored GPS data. Locations which are visited frequently are probably important locations and worth recording.

Step 105 can comprise identifying clusters of GPS position measurements, with each identified cluster being considered to be an important location for the user. A cluster can be identified by the proximity of a plurality of position measurements to each other. A cluster can also be identified as a location worth noting by examining whether the user has visited that location on more than one occasion, for example by comparing the time (and date) of the position measurements in a cluster.

Clustering can be performed using simple k-means clustering of locations, or a hidden Markov model or Bayesian network could be used to create a probability distribution of locations in time. Those skilled in the art will be aware of other algorithms and techniques that can be used to perform this clustering.

Figure 4 shows the result of applying a clustering algorithm to the position measurements illustrated in Figure 3, where it can be seen that two clusters 34a, 34b have been identified in the position measurements. Figure 4 also shows the approximate areas covered by three cells, and it can be seen that cluster 34a is within the coverage area of a cell A and cluster 34b is within the coverage area of a cell C.

Step 105 can also or alternatively comprise identifying particular trips or journeys undertaken by the user from consecutive measurements of the position of the device 2. A tracking algorithm can be used to identify a single trip taken by the user, such as that indicated by route 36 with an end point (destination) 38. It can be assumed that the endpoint of this path is an important location and therefore is worth recording. Those skilled in the art will be aware of algorithms and techniques for identifying these trips or journeys from the position measurements. In Figure 4, it can be seen that the end point 38 of route 36 is found within cell B.

In some implementations, the end point may be identified by the device 2 no longer being unable to measure its position using GPS, for example due to the device 2 being taken indoors. Alternatively, another sensor in the device 2 (such as an accelerometer) may indicate that a journey has ended by a lack of movement of the device 2 being detected.

An additional or alternative way of identifying important locations is to activate the GPS receiver 12 when activity (i.e. motion of the device 2) is detected after a long stationary period. If it is not possible to measure the position of the device 2 using GPS straight away (or within a suitable time window to allow for the device 2 to obtain a GPS position measurement), the GPS receiver 12 can be left on for a period of time until a position measurement is obtained. This position measurement can be interpreted as the user and mobile device 2 leaving a building. This position measurement can therefore be considered as a landmark, which is associated with a Cell_ID, thereby allowing the building to be properly identified the next time the user visits.

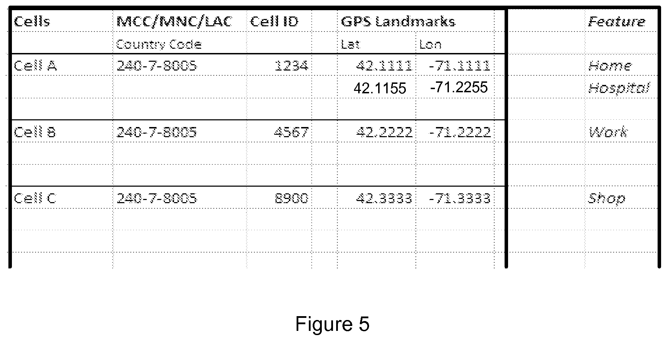

Figure 5 shows an example of the content of a geoprediction database in which details of the identified locations or landmarks are stored. Each identified location or landmark entry comprises the GPS position or positions (if multiple GPS position measurements have been obtained in a particular location) associated with the location or landmark, and the Cell_ID of the cell serving the mobile device 2 when at that location (i.e. the serving Cell_ID when the GPS position measurements were taken).

Thus, in Figure 5, the row marked 'Cell A' shows a unique Cell ID and a list of GPS positions considered to be important locations or landmarks corresponding to that cell, namely the GPS positions corresponding to the user's home and the hospital. These will be the locations where a search for the user will be started should GPS be unavailable and an alarm be triggered while the mobile device 2 is being served by Cell A.

It will be appreciated that it is possible for the result of the analysis in step 105 to determine that multiple Cell_IDs are associated with a particular location (landmark), and in this case a particular location will be associated with each of those Cell_IDs in the database.

Returning to Figure 2, in step 107, it is determined where the button 4 has been activated or an alarm otherwise initiated. If not, the process waits until an alarm is triggered (indicated by line 109). Alternatively, or in addition, the process can return to step 101 to allow further position and Cell_ID measurements to be made (indicated by line 111), which means the geoprediction database can be constantly updated to reflect the current or typical behavior of the user.

If an alarm is triggered, it is determined whether it is possible to measure the position of the mobile device 2 using GPS (step 113). If it is possible, a GPS position measurement is made and provided to the call centre.

If it is not possible to measure the position of the mobile device 2 using GPS, the mobile device 2 determines the identity of the cell serving the mobile device 2 and queries the geoprediction database with this Cell_ID to determine if there are any important or frequently visited locations (landmarks) associated with that Cell_ID.

If one or more locations are found in the database for that Cell_ID, the mobile device 2 can extract the GPS position information for those positions and send this to the call centre (step 119). It will be appreciated that this information can be sent with an appropriate flag or other identifier that indicates to the call centre that this position information is an estimate or prediction based on the information in the geoprediction database. The position data can be sent to the call centre in the form of a text or multimedia message, or over a 2G, 3G or 4G data connection established between the mobile device 2 and the network.

Where there are multiple locations in the database for that Cell_ID, it is possible to use further information in order to identify the location the user is most likely to be at. In one embodiment, each entry in the database can include information on the time of day during which the user is typically at that location. This information can be recorded when each position measurement is obtained. For example, a recorded location corresponding to the place of work of the user may be associated with the times 8am to 5pm on weekdays, and a recorded location corresponding to a restaurant in the same cell could be associated with the times 8pm to 10pm on a weekend. In extracting the estimated location information from the database, the mobile device 2 can compare the current time to the multiple locations and provide information on the most likely one to the call centre (or alternatively order the provided locations in order of likelihood).

In a further or alternative embodiment, if the mobile device 2 has collected and stored information on the strength of the signals received at the mobile device 2 from the base station (which can be collected when each GPS position measurement is taken), the mobile device 2 can use the currently measured signal strength and Cell_ID to query the database for the relevant identified locations. The measured signal strength can help to differentiate between multiple locations for a particular Cell_ID.

As a further enhancement, the mobile device 2 can collect and store information on the strength of signals received from neighboring cells (i.e. cells that were not serving the mobile device 2 at the time that the GPS position measurement was taken - including cells forming part of networks operated by different network providers), and corresponding information can be collected and used to query the database to filter the multiple locations for the serving Cell_ID.

This embodiment can be further enhanced by using the measurements of the strength of signals received from the serving base station and the neighboring cells to determine an approximate position of the mobile device 2 by triangulation. The triangulated position can be compared to the GPS measurements associated with the locations identified for the serving Cell_ID in the database.

Other information that can be measured or obtained by the mobile device 2 and used to identify and distinguish between multiple landmarks within a cell can include temperature, sound, available WiFi networks and camera images.

It will be appreciated that the method in Figure 2 is broadly split into two parts, the first part, corresponding to steps 101, 103 and 105, relates to generating a database of locations (landmarks) visited by the user and mobile device 2, and the second part, corresponding to steps 107, 109, 111, 113 and 115, relates to the use of the information in the database to provide location information to the call centre when a button 4 or an alarm is activated. It will be appreciated, however, that this split is merely for the purposes of illustrating the invention, and the generation and maintenance of the database is an ongoing process.

It will also be appreciated that although in the embodiment described and illustrated above the database is created and maintained in the mobile device 2, it is possible for the database to be created and maintained in a remote server, which, for example, can be located at the call centre, and the mobile device 2 can simply provide the Cell_ID to the call centre if a GPS position measurement is unavailable, and the database in the server at the call centre can be queried using the received Cell_ID to determine a possible location for the user.

In a further embodiment, the mobile device 2 can provide the most recent GPS position measurement (or a plurality of the most recent GPS position measurements) with the Cell_ID in step 117. This way, the call centre can be provided with the last known accurate position or positions of the mobile device 2 and the possible location or locations (landmarks) in that cell for the user. By plotting the potential landmarks and the most recent GPS position measurement(s) on a map, the call centre personnel may be able to deduce the best location to start looking for the user.

In a yet further embodiment, if the mobile device 2 determines that it is proximate to a known landmark stored in the database (for example by comparing a newly acquired GPS position measurement to the database entries), the mobile device 2 can reduce the frequency with which further GPS position measurements are taken in order to reduce the power consumption of the mobile device 2. The frequency can be returned to the normal level once the mobile device 2 determines that it is no longer proximate to a known landmark.

Thus, this invention provides an extension to existing mobile PERS devices 2 to assist in providing useful location information for the user even when the main location technology, e.g. GPS, is unavailable. The invention can be implemented entirely on the mobile device 2 itself, and does not require an active voice or data connection to the network in order to build the database.

There is therefore provided a technique for determining the location of a user when GPS or other satellite-based positioning systems are unavailable.

While the invention has been illustrated and described in detail in the drawings and foregoing description, such illustration and description are to be considered illustrative or exemplary and not restrictive; the invention is not limited to the disclosed embodiments.

## Claims

1. A method of estimating the location of a mobile device, the mobile device being configured for use in a cellular mobile communications network comprising a plurality of base stations, the method comprising:
generating a database of landmarks visited by the mobile device by:
obtaining measurements of the position of the mobile device over a period of time using a satellite-based positioning system;
obtaining the identity of the base station serving the mobile device at the time of each measurement of the position of the mobile device; and
analyzing the measurements obtained over said period of time to identify landmarks, wherein a landmark is a location which is frequently or regularly visited by the mobile device; and
storing each identified landmark in the database, whereby each landmark entry comprises the position measurements associated with said landmark, and the identity of the base station serving said mobile device when at said landmark; and
during subsequent use of the mobile device, in the event that it is not possible to use the satellite-based positioning system to measure the position of the mobile device, estimating the location of the mobile device as one or more identified landmarks that are associated with the base station by which the mobile device is currently served.

2. A method as claimed in claim 1, wherein the step of analyzing the measurements to identify landmarks comprises:
identifying clusters in the measurements of the position of the mobile device; and
identifying each identified cluster as a landmark.

3. A method as claimed in claim 1 or 2, wherein the step of analyzing the measurements to identify landmarks comprises:
identifying a journey undertaken by the user from consecutive measurements of the position of the user; and
identifying the end point of the journey as a landmark.

4. A method as claimed in claim 3, wherein the end point of the journey corresponds to a point at which it becomes not possible to use the satellite-based positioning system to measure the position of the mobile device.

5. A method as claimed in claim 3 or 4, wherein the end point of the journey corresponds to a point at which a movement sensor in the mobile device indicates that the mobile device is no longer moving.

6. A method as claimed in any preceding claim, wherein the step of analyzing the measurements to identify landmarks comprises identifying a landmark as corresponding to a first measurement of the position of the mobile device obtained after a period of time during which the mobile device is stationary.

7. A method as claimed in any preceding claim, further comprising the step of:
noting the time at which each measurement of the position of the mobile device is obtained;
wherein the step of analyzing the measurements to identify landmarks further comprises identifying the times at which the mobile device is at each landmark; and
wherein the step of estimating the location of the mobile device uses the current time and identity of the base station by which the mobile station is currently served.

8. A method as claimed in any preceding claim, further comprising the step of:
obtaining measurements of the strength of signals received from the base station serving the mobile device at the time of each measurement of the position of the mobile device;
wherein the step of analyzing the measurements to identify landmarks further comprises identifying the measured signal strength when the mobile device is at each landmark; and
wherein the step of estimating the location of the mobile device uses the identity and current measured signal strength of the base station by which the mobile station is currently served.

9. A method as claimed in any preceding claim, wherein the step of estimating the location of the mobile device comprises estimating the location of the mobile device using a recent measurement of the position of the mobile device and the one or more identified landmarks that are associated with the base station by which the mobile device is currently served.

10. A method as claimed in any preceding claim, wherein the step of estimating the location of the mobile device is performed after a user of the mobile device triggers an alarm or an alarm is otherwise triggered by the mobile device.

11. A method as claimed in any preceding claim, further comprising the step of sending information on the one or more identified landmarks that are associated with the base station by which the mobile device is currently served
from the mobile device to a remote location.

12. An apparatus, comprising:
a processor that is configured to:
receive measurements of the position of a mobile device obtained over a period of time using a satellite-based positioning system;
determine the identity of a base station in a cellular telecommunications network serving the mobile device at the time of each measurement of the position of the mobile device;
analyze the measurements obtained over said period of time to identify landmarks, wherein a landmark is a location which is frequently or regularly visited by the mobile device; and
store, in a memory connected to the processor, each identified landmark, whereby each landmark entry comprises the position measurements associated with said landmark, and the identity of the base station serving said mobile device when at said landmark; and
during subsequent use of the mobile device, in the event that it is not possible to determine a measurement of the position of the mobile device using the satellite-based positioning system, estimate the location of the mobile device as one or more identified landmarks that are associated with the base station by which the mobile device is currently served.

13. An apparatus as claimed in claim 12, wherein the apparatus is the mobile device.

14. An apparatus as claimed in claim 12, wherein the apparatus is a server that is configured to communicate with the mobile device.

15. A computer program product, comprising computer program code that, when executed on a suitable computer or processor, is configured to cause the computer or processor to perform the method as claimed in any of claims 1 to 11.

## Patentansprüche

1. Verfahren zur Bestimmung des Standorts eines Mobilgeräts, wobei das Mobilgerät zum Einsatz in einem zellularen Mobilfunknetz mit einer Mehrzahl von Basisstationen konfiguriert ist, wobei das Verfahren die folgenden Schritte umfasst, wonach:
eine Datenbank von, von dem Mobilgerät besuchten Landmarken erzeugt wird, indem:
Messungen der Position des Mobilgeräts über einen Zeitraum unter Inanspruchnahme eines satellitenbasierten Positionsbestimmungssystems erhalten werden;
die Identität der das Mobilgerät versorgenden Basisstation zum Zeitpunkt jeder Messung der Position des Mobilgeräts erhalten wird; und
die über den besagten Zeitraum erhaltenen Messungen analysiert werden, um Landmarken zu identifizieren, wobei eine Landmarke ein Standort ist, der von dem Mobilgerät häufig oder regelmäßig besucht wird; und
jede identifizierte Landmarke in der Datenbank gespeichert wird, wobei jede Landmarkeneingabe die der Landmarke zugeordneten Positionsmessungen sowie die Identität der Basisstation, die das Mobilgerät an besagter Landmarke versorgt, umfasst; und
während der anschließenden Verwendung des Mobilgeräts, im Falle es nicht möglich ist, das satellitenbasierte Positionsbestimmungssystem zur Messung der Position des Mobilgeräts zu nutzen, die Position des Mobilgeräts als eine oder mehrere identifizierte Landmarken, die der Basisstation zugeordnet sind, die das Mobilgerät aktuell versorgt, bestimmt wird.

2. Verfahren nach Anspruch 1, wobei der Schritt des Analysierens der Messungen zur Identifizierung von Landmarken umfasst:
Identifizieren von Clustern in den Messungen der Position des Mobilgeräts; sowie
Identifizieren von jedem identifizierten Cluster als eine Landmarke.

3. Verfahren nach Anspruch 1 oder 2, wobei der Schritt des Analysierens der Messungen zur Identifizierung von Landmarken umfasst:
Identifizieren einer von dem Benutzer unternommenen Fahrt aus konsekutiven Messungen der Position des Benutzers; sowie
Identifizieren des Endpunkts der Fahrt als eine Landmarke.

4. Verfahren nach Anspruch 3, wobei der Endpunkt der Fahrt einem Punkt entspricht, an dem keine Möglichkeit besteht, das satellitenbasierte Positionsbestimmungssystem zur Messung der Position des Mobilgeräts zu nutzen.

5. Verfahren nach Anspruch 3 oder 4, wobei der Endpunkt der Fahrt einem Punkt entspricht, an dem ein Bewegungssensor in dem Mobilgerät signalisiert, dass sich das Mobilgerät nicht mehr bewegt.

6. Verfahren nach einem der vorangegangenen Ansprüche, wobei der Schritt des Analysierens der Messungen zur Identifizierung von Landmarken das Identifizieren einer Landmarke als mit einer nach einem Zeitraum, in dem das Mobilgerät stationär ist, erhaltenen ersten Messung der Position des Mobilgeräts korrespondierend umfasst.

7. Verfahren nach einem der vorangegangenen Ansprüche, das weiterhin den Schritt umfasst, wonach:
der Zeitpunkt vermerkt wird, zu dem jede Messung der Position des Mobilgeräts erhalten wird;
wobei der Schritt des Analysierens der Messungen zur Identifizierung von Landmarken weiterhin das Identifizieren der Zeitpunkte umfasst, zu denen sich das Mobilgerät an jeder Landmarke befindet; und
wobei der Schritt des Bestimmens der Position des Mobilgeräts die Verwendung des aktuellen Zeitpunkts und der Identität der Basisstation, die das Mobilgerät aktuell versorgt, beinhaltet.

8. Verfahren nach einem der vorangegangenen Ansprüche, das weiterhin den Schritt umfasst, wonach:
Messungen der Stärke von Signalen erhalten werden, die von der das Mobilgerät versorgenden Basisstation zu dem Zeitpunkt jeder Messung der Position des Mobilgeräts empfangen werden;
wobei der Schritt des Analysierens der Messungen zur Identifizierung von Landmarken weiterhin das Identifizieren der gemessenen Signalstärke umfasst, wenn sich das Mobilgerät an jeder Landmarke befindet; und
wobei der Schritt des Bestimmens des Standorts des Mobilgeräts die Verwendung der Identität und der aktuell gemessenen Signalstärke der Basisstation, durch die das Mobilgerät aktuell versorgt wird, beinhaltet.

9. Verfahren nach einem der vorangegangenen Ansprüche, wobei der Schritt des Bestimmens des Standorts des Mobilgeräts das Bestimmen des Standorts des Mobilgeräts unter Verwendung einer neuesten Messung der Position des Mobilgeräts und der einen oder mehrerer identifizierten Landmarken, die der Basisstation zugeordnet sind, die das Mobil aktuell versorgt, beinhaltet.

10. Verfahren nach einem der vorangegangenen Ansprüche, wobei der Schritt des Bestimmens des Standorts des Mobilgeräts ausgeführt wird, nachdem ein Benutzer des Mobilgeräts einen Alarm auslöst oder von dem Mobilgerät ein Alarm anderweitig ausgelöst wird.

11. Verfahren nach einem der vorangegangenen Ansprüche, das weiterhin den Schritt des Übertragens von Informationen über die eine oder mehrere identifizierte Landmarken, die der Basisstation zugeordnet sind, von der das Mobilgerät aktuell versorgt wird, von dem Mobilgerät zu einem entfernten Standort umfasst.

12. Vorrichtung, umfassend:
einen Prozessor, der so konfiguriert ist, dass er:
Messungen der Position eines Mobilgeräts, die über einen Zeitraum unter Inanspruchnahme eines satellitenbasierten Positionsbestimmungssystems erhalten werden, empfängt;
die Identität einer Basisstation in einem zellularen Telekommunikationsnetz, das das Mobilgerät zu dem Zeitpunkt jeder Messung der Position des Mobilgeräts versorgt, ermittelt;
die über den Zeitraum erhaltenen Messungen analysiert, um Landmarken zu identifizieren, wobei eine Landmarke ein Standort ist, der von dem Mobilgerät häufig oder regelmäßig besucht wird; und
in einem mit dem Prozessor verbundenen Speicher jede identifizierte Landmarke speichert, wobei jede Landmarkeneingabe die der Landmarke zugeordneten Positionsmessungen sowie die Identität der Basisstation, die das Gerät versorgt, wenn sich dieses an der Landmarke befindet, umfasst; und
während der anschließenden Verwendung des Mobilgeräts, im Falle es nicht möglich ist, eine Messung der Position des Mobilgeräts unter Inanspruchnahme des satellitenbasierten Positionsbestimmungssystems zu ermitteln, die Position des Mobilgeräts als eine oder mehrere identifizierte Landmarken, die der Basisstation zugeordnet sind, die das Mobilgerät aktuell versorgt, bestimmt.

13. Vorrichtung nach Anspruch 12, wobei es sich bei der Vorrichtung um das Mobilgerät handelt.

14. Vorrichtung nach Anspruch 12, wobei es sich bei der Vorrichtung um einen Server handelt, der so konfiguriert ist, dass er mit dem Mobilgerät kommuniziert.

15. Computerprogrammprodukt mit einem Computerprogrammcode, der so konfiguriert ist, dass er bei Ausführung auf einem geeigneten Computer oder Prozessor bewirkt, dass der Computer oder Prozessor das Verfahren nach einem der Ansprüche 1 bis 11 ausführt.

## Revendications

1. Procédé d'estimation de la localisation d'un dispositif mobile, le dispositif mobile étant configuré pour être utilisé dans un réseau de communication mobile cellulaire comprenant une pluralité de stations de base, le procédé comprenant :
la génération d'une base de données de points de repère visités par le dispositif mobile par :
l'obtention de mesures de la position du dispositif mobile sur une période de temps à l'aide d'un système de positionnement par satellite ;
l'obtention de l'identité de la station de base desservant le dispositif mobile au moment de chaque mesure de la position du dispositif mobile ; et
l'analyse des mesures obtenues sur ladite période de temps pour identifier des points de repère, dans lequel un point de repère est une localisation qui est fréquemment ou régulièrement visitée par le dispositif mobile ; et
le stockage de chaque point de repère identifié dans la base de données, moyennant quoi chaque entrée de point de repère comprend les mesures de position associées audit point de repère, et l'identité de la station de base desservant ledit dispositif mobile lorsqu'il se trouve au niveau dudit point de repère ; et
pendant une utilisation ultérieure du dispositif mobile, dans le cas où il n'est pas possible d'utiliser le système de positionnement par satellite pour mesurer la position du dispositif mobile, l'estimation de la localisation du dispositif mobile en tant qu'un ou plusieurs points de repère identifiés qui sont associés à la station de base par laquelle le dispositif mobile est actuellement desservi.

2. Procédé selon la revendication 1, dans lequel l'étape d'analyse des mesures pour identifier des points de repère comprend :
l'identification de grappes dans les mesures de la position du dispositif mobile ; et
l'identification de chaque grappe identifiée en tant que point de repère.

3. Procédé selon la revendication 1 ou 2, dans lequel l'étape d'analyse des mesures pour identifier des points de repère comprend :
l'identification d'un déplacement entrepris par l'utilisateur à partir de mesures consécutives de la position de l'utilisateur ; et
l'identification du point final du déplacement en tant que point de repère.

4. Procédé selon la revendication 3, dans lequel le point final du déplacement correspond à un point auquel il devient impossible d'utiliser le système de positionnement par satellite pour mesurer la position du dispositif mobile.

5. Procédé selon la revendication 3 ou 4, dans lequel le point final du déplacement correspond à un point auquel un capteur de mouvement dans le dispositif mobile indique que le dispositif mobile ne bouge plus.

6. Procédé selon l'une quelconque des revendications précédentes, dans lequel l'étape d'analyse des mesures pour des points de repère comprend l'identification d'un point de repère comme correspondant à une première mesure de la position du dispositif mobile obtenue après une période de temps pendant laquelle le dispositif mobile est stationnaire.

7. Procédé selon l'une quelconque des revendications précédentes, comprenant en outre l'étape :
d'observation du moment auquel chaque mesure de la position du dispositif mobile est obtenue ;
dans lequel l'étape d'analyse des mesures pour identifier des points de repère comprend en outre l'identification des moments auxquels le dispositif mobile se trouve au niveau de chaque point de repère ; et
dans lequel l'étape d'estimation de la localisation du dispositif mobile utilise le moment actuel et l'identité de la station de base par laquelle la station mobile est actuellement desservie.

8. Procédé selon l'une quelconque des revendications précédentes, comprenant en outre l'étape :
d'obtention de mesures de l'intensité de signaux reçus en provenance de la station de base desservant le dispositif mobile au moment de chaque mesure de la position du dispositif mobile ;
dans lequel l'étape d'analyse des mesures pour identifier des points de repère comprend en outre l'identification de l'intensité de signal mesurée lorsque le dispositif mobile se trouve au niveau de chaque point de repère ; et
dans lequel l'étape d'estimation de la localisation du dispositif mobile utilise l'identité et une intensité de signal mesurée actuelle de la station de base par laquelle la station mobile est actuellement desservie.

9. Procédé selon l'une quelconque des revendications précédentes, dans lequel l'étape d'estimation de la localisation du dispositif mobile comprend l'estimation de la localisation du dispositif mobile en utilisant une mesure récente de la position du dispositif mobile et les un ou plusieurs points de repère identifiés qui sont associés à la station de base par laquelle le dispositif mobile est actuellement desservi.

10. Procédé selon l'une quelconque des revendications précédentes, dans lequel l'étape d'estimation de la localisation du dispositif mobile est réalisée après qu'un utilisateur du dispositif mobile déclenche une alarme ou qu'une alarme est sinon déclenchée par le dispositif mobile.

11. Procédé selon l'une quelconque des revendications précédentes, comprenant en outre l'étape d'envoi d'informations concernant les un ou plusieurs points de repère identifiés qui sont associés à la station de base par laquelle le dispositif mobile est actuellement desservi du dispositif mobile à une localisation à distance.

12. Appareil, comprenant :
un processeur qui est configuré pour :
recevoir des mesures de la position d'un dispositif mobile obtenues sur une période de temps à l'aide d'un système de positionnement par satellite ;
déterminer l'identité d'une station de base dans un réseau de télécommunication cellulaire desservant le dispositif mobile au moment de chaque mesure de la position du dispositif mobile ;
analyser les mesures obtenues sur ladite période de temps pour identifier des points de repère, dans lequel un point de repère est une localisation qui est fréquemment ou régulièrement visitée par le dispositif mobile ; et
stocker, dans une mémoire connectée au processeur, chaque point de repère identifié, moyennant quoi chaque entrée de point de repère comprend les mesures de position associées audit point de repère, et l'identité de la station de base desservant ledit dispositif mobile lorsqu'il se trouve au niveau dudit point de repère ; et
pendant une utilisation ultérieure du dispositif mobile, dans le cas où il n'est pas possible de déterminer une mesure de la position du dispositif mobile à l'aide du système de positionnement par satellite, estimer la localisation du dispositif mobile en tant qu'un ou plusieurs points de repère identifiés qui sont associés à la station de base par laquelle le dispositif mobile est actuellement desservi.

13. Appareil selon la revendication 12, dans lequel l'appareil est le dispositif mobile.

14. Appareil selon la revendication 12, dans lequel l'appareil est un serveur qui est configuré pour communiquer avec le dispositif mobile.

15. Produit de programme d'ordinateur, comprenant un code de programme d'ordinateur qui, lorsqu'il est exécuté sur un ordinateur ou un processeur adapté, est configuré pour amener l'ordinateur ou le processeur à réaliser le procédé tel que revendiqué dans l'une quelconque des revendications 1 à 11.
